(19) Europäisches Patentamt

European Patent Office

Office européen des brevets

(11) **EP 1 688 763 A1**

(12) **EUROPEAN PATENT APPLICATION**

(43) Date of publication:
09.08.2006 Bulletin 2006/32

(51) Int Cl.:
*G01V 15/00* (2006.01)    *G08B 13/24* (2006.01)

(21) Application number: 06100934.6

(22) Date of filing: 27.01.2006

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **08.02.2005 JP 2005031266**

(71) Applicants:
• **Lintec Corporation
Tokyo 173-0001 (JP)**
• **CDN Corporation
Miyazaki-shi,
Miyazaki 880-0934 (JP)**

(72) Inventors:
• **IWAKATA, Yuichi
335-0005, Saitama (JP)**
• **MOROYA, Tetsuo
335-0005, Saitama (JP)**
• **MATSUI, Kunihiko
880-0934, Miyazaki (JP)**
• **HIBARINO, Toshihisa
880-0934, Miyazaki (JP)**

(74) Representative: **Hengelhaupt, Jürgen
Anwaltskanzlei
Gulde Hengelhaupt Ziebig & Schneider
Wallstrasse 58/59
10179 Berlin (DE)**

(54) **Decision machine of detection tag using magnetic field**

(57)    The present invention discloses a decision machine of detection tag (26) using magnetic field, comprising:

a cross coil (22) constituted by a plurality of individual coils which have been wound round a frame member (42) so as to form a predetermined differential angle between the central axes of the individual coils,
a magnetic power supply part (24) comprising an oscillator for generating an AC power and a phase modulator for differing each other the phase of AC power generated by the oscillator, by a predetermined differential angle, to supply powers of different phases to the individual coils,
a signal processor part (28) connected to the plurality of individual coils, and
a decision part (30) for deciding the output signal sent from the signal processor part.

Fig. 1

( b )

**Description**

Technical Field

The present invention relates to a decision machine of detection tag using magnetic field, used for confirmation of the deactivation of a magnetic detection tag (hereinafter referred to also as detection tag or EM tag). More particularly, the present invention relates to a decision machine of detection tag using magnetic field, which is used for confirming, after the deactivation operation of a detection tag, whether or not the detection tag has been deactivated reliably by a deactivation operation.

Background Art

Detection tags using a magnetic field as a detection means are known. They are attached to goods, etc., are carried with the goods and, when passing through particular gates, are detected by the gates; thereby, the circulation of goods is controlled and the theft of goods is prevented (Claim 1 of JP 1994-342065A). Such a detection tag using a magnetic field is also called EM (electric magnetic) tag.

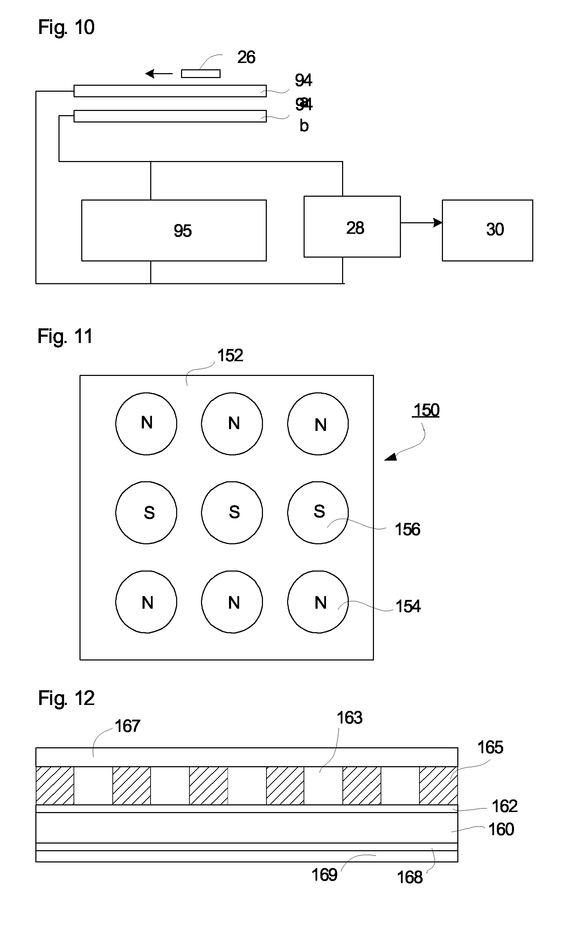

Fig. 12 shows a conventional detection tag. In Fig. 12, 160 is a soft magnetic substance layer containing cobalt, etc. On one side of the soft magnetic substance layer 160 is laminated, via a polyester-based adhesive layer 162, a hard magnetic substance layer 165 having a large number of through-holes 163 formed therein. The hard magnetic substance layer 165 contains a hard magnetic substance element(s) such as nickel or (and) the like. On the upper side of the hard magnetic substance layer 165 is laminated a protective layer 167 made of wood-free paper or a resin film.

On the other side of the soft magnetic substance layer 160 is laminated a release liner 169 via a pressure-sensitive adhesive layer 168.

In using this detection tag, the release liner 169 is peeled and the release liner 169-removed detection tag is adhered to goods or the like to be controlled.

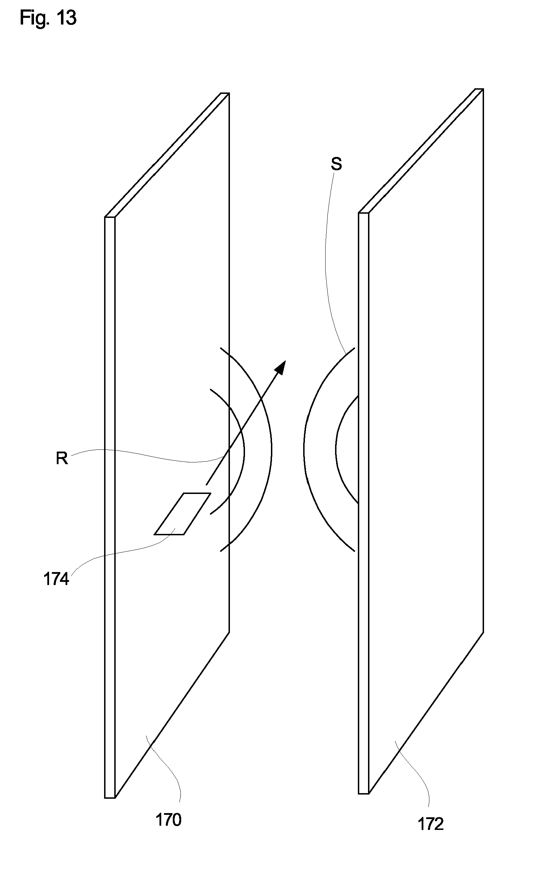

Fig. 13 shows gates 170 and 172 which detect a detection tag. An alternating magnetic field S is formed between the gates 170 and 172. The gates 170 and 172 is fitted a detector (not shown) for detecting a magnetic field intensity, and the detector detects a magnetic field intensity formed between the gates 170 and 172.

Incidentally, 174 is a detection tag. When the detection tag 174 moves between the gates 170 and 172 to a direction indicated by an arrow R, in a state fitted to goods, etc. (not shown), the magnetic field S formed between the gates 170 and 172 is distorted by the detection tag 174. By detecting this distortion of the magnetic field S using the detector (not shown), the passing of the detection tag 174 between the gates 170 and 172 is detected.

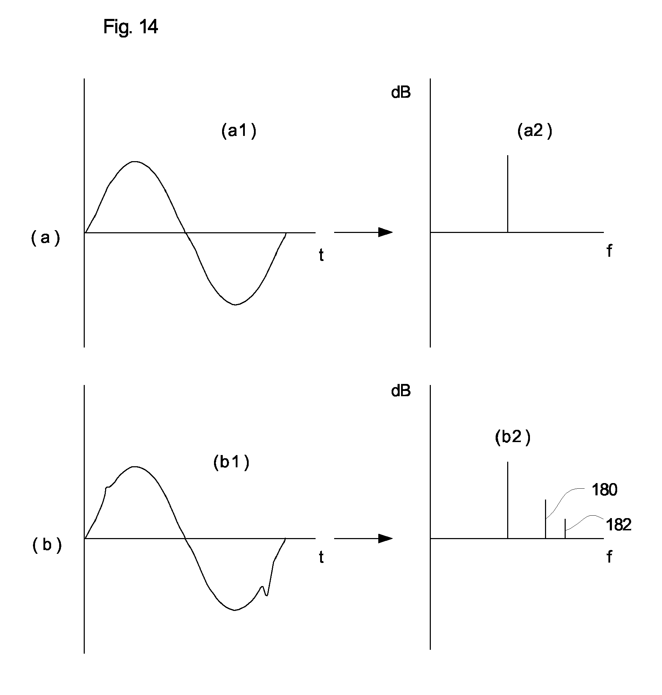

Fig. 14 shows a method for specifically detecting the distortion of magnetic field. In Fig. 14, (a1) shows the waveform of an alternating magnetic field of particular frequency formed between the gates 170 and 172 of Fig. 13. By converting the axis of time into an axis of frequency using a simple mathematical means, this waveform of alternating magnetic field is converted into a waveform shown in (a2).

In Fig. 14, (b1) shows the waveform of an alternating magnetic field which has been distorted by the passing of detection tag 174 between gates 170 and 172. By subjecting this distorted waveform to the same axis conversion as above, a waveform shown in (b2) is obtained. In the waveform of (b2), there are seen harmonics 180 and 182 caused by the distortion of alternating magnetic field. By detecting these harmonics and examining the patterns thereof, the passing of detection tag 174 between gates 170 and 172 can be confirmed.

For example, when goods or the like purchased normally is in a state that it can be carried out, the detection tag 174 adhered to the goods or the like is deactivated beforehand. Owing to this deactivation operation, there occurs no distortion of magnetic field when the detection tag 174 adhered to the goods or the like is passed between gates 170 and 172. Consequently, the detection tag adhered to the goods or the like is not detected during the passing between the gates and the goods or the like is carried outside.

Meanwhile, when the goods or the like is carried out illegally, the detection tag 174 adhered thereto is in a state not deactivated. Therefore, when the goods or the like containing the detection tag 174 not deactivated is passed between gates 170 and 172, distortion of magnetic field takes place. Detection of this distortion of magnetic field can detect illegal take-out of goods or the like.

Deactivation of detection tag can be achieved by magnetizing the hard magnetic substance layer 165 of detection tag shown in Fig. 12, using a deactivation machine.

Fig. 11 shows a deactivation machine used conventionally. This deactivation machine 150 comprises a support 152 and disc-shaped permanent magnets of 12 mm in diameter, arranged at intervals of about 10 mm. The permanent magnets are arranged so that an N pole 154 and a S pole 156 appear alternately.

When the detection tag shown in Fig. 12 touches on the upper surface of the deactivation machine 150, the hard magnetic substance layer 165 is magnetized and thereby the detection tag is deactivated.

In deactivating a detection tag by using a conventional deactivation machine, however, all the detection tags subjected to the deactivation are not always deactivated reliably and there are cases of no deactivation. In such cases, even the commodities purchased legally are detected at gates and are regarded as illegally purchased commodities, causing a big problem.

In order to solve this problem, the present inventors proposed a deactivation machine comprising the above-mentioned deactivation machine using permanent magnets and a means for confirmation of deactivation, fitted thereto (Japanese Patent Application 2004-322700). This means for confirmation of deactivation comprises total two loop coils each having a function of generating a magnetic field and a function of detecting the reflected signal from a detection tag, and a signal-detecting circuit.

In the means for confirmation of deactivation, the two loop coils generate magnetic fields. Any detection tag which has not been deactivated successfully, reflects the generated magnetic fields and the reflected signals are received by the two loop coils. The reflected signals received are taken out as a differential signal of the two loop coils and thereby the deactivation or non-deactivation of detection tag is confirmed.

In the deactivation machine proposed above, it was found that the detectability of the means for confirmation of deactivation may be low depending upon the entering direction when a detection tag enters a deactivation surface (a surface at which magnets are arranged alternately). For example, the detection sensitivity for a detection tag entering the periphery of the deactivation surface may be low. In such a case, deactivation state of a detection tag subjected to deactivation operation may not be decided correctly.

Disclosure of the Invention

The present inventors made a study in order to solve the above problem and thought of a cross coil constituted by a plurality of coils for magnetic field generation which have been wound so as to form a predetermined differential angle between the central axes of the individual coils. By supplying AC powers of different phases to this cross coil, the magnetic field generated by the cross coil become uniform. As a result, variation of the detection sensitivity for detection tag, which occurs depending upon the entering site of detection tag, can be eliminated.

The present invention has been completed based on the above finding. Accordingly, the present invention aims at providing a decision machine of detection tag using magnetic field, which can reliably confirm the deactivation of detection tag irrespective of the entering site of detection tag.

The present invention, which has achieved the above aim, is as described below.

[1] A decision machine of detection tag using magnetic field, comprising:

a cross coil constituted by a plurality of individual coils which have been wound round a frame member so as to form a predetermined differential angle between the central axes of the individual coils,
a magnetic power supply part comprising an oscillator for generating an AC power and a phase modulator for differing each other the phase of AC power generated by the oscillator, by a predetermined differential angle, to supply powers of different phases to the individual coils,
a signal processor part connected to the plurality of individual coils, and
a decision part for deciding the output signal sent from the signal processor part.

[2] The decision machine of detection tag using magnetic field, comprising:

a cross coil constituted by a plurality of individual coils which have been wound round a frame member so as to form a predetermined differential angle between the central axes of the individual coils,
a magnetic power supply part comprising an oscillator for generating an AC power and a phase modulator for differing each other the phase of AC power generated by the oscillator, by a predetermined differential angle, to supply powers of different phases to the individual coils,
at least one detection coil provided parallel to a plane including the central axes of the individual coils,
a signal processor part connected to the at least one detection coil, for processing the output signal of the detection coil, and
a decision part for deciding the output signal sent from the signal processor part.

[3] The decision machine of detection tag using magnetic field according to [2], wherein a plurality of detection coils are connected in series so that the magnetic flux directions of each adjacent detection coils become opposite to each other.

[4] The decision machine of detection tag using magnetic field according to any of [1] to [3], wherein the cross coil is provided so that the magnetic flux directions of two adjacent individual coils differ by 90° and wherein the phases of the AC powers supplied to the individual coils are allowed to differ by 90°.

In the decision machine of detection tag using magnetic field according to the present invention, there is used, as a coil for magnetic field generation, a cross coil constituted by a plurality of individual coils which have been wound so as to form a predetermined differential angle between the central axes of the individual coils. Therefore, a reduction in the detection sensitivity for detection tag, which occurs depending upon the entering site of detection tag, can be eliminated with no necessity of intensifying the electric current supplied to the coils. As a result, the deactivation of detection tag can be confirmed reliably. Thus, there can be reliably avoided a mistake by which a non-deactivated detection tag is detected at gates.

Brief Description of the Drawings

Fig. 1 is a view showing an example of a cross coil used in the present invention. (a) is a plan view and (b) is a side view.
Fig. 2 is a conceptual view showing an example of a constitution of the decision machine of detection tag using magnetic field, of the present invention.
Fig. 3 is a block diagram showing an example of a circuit constitution of the decision machine of detection tag using magnetic field, of the present invention.
Fig. 4 is a view showing other example of cross coil used in the present invention.
Fig. 5 is a block diagram showing other example of circuit constitution of the decision machine of detection tag using magnetic field, of the present invention.
Fig. 6 is a view showing an example of a constitution of the decision machine of detection tag using magnetic field, of Fig. 5.
Fig. 7 is a view showing an example of a detection coil of the decision machine of detection tag using magnetic field, of Fig. 5.
Fig. 8 is a view showing other example of the decision machine of detection tag using magnetic field, of the present invention.
Fig. 9 is a view showing still other example of the decision machine of detection tag using magnetic field, of the present invention.
Fig. 10 is a view showing the constitution of the decision machine of detection tag using magnetic field, of Comparative Example.
Fig. 11 is a plan view showing a conventional deactivation machine.
Fig. 12 is a side view showing an example of a constitution of the detection tag.
Fig. 13 is a view showing a method for detection of detection tag.
Fig. 14 is a view showing a principle of detection of detection tag. (a) shows the waveform of an alternating magnetic field generated between gates, and (b) show the waveform of an alternating magnetic field when a detection tag has been detected.

In these drawings, 22 is a cross coil; 24 is a magnetic power supply part; 26 is a detection tag; 28, 28a and 28b are each a signal processor part; 30 is a decision part; 42 and 62 are each a frame member; 44, 48, 64, 66 and 68 are each a coated conductor.
46 is a first individual coil; X, Y and Z are each an arrow; 50 is a second individual coil; $\alpha$ is an angle formed by the central axes of individual coils; 32 is an oscillator; 34 is a phase modulator; 910 is a cross coil; 82 is a detection coil; 83 is a substrate; 84a to 84i are each a small coil; 94a and 94b are each a circular planar coil; 95 is a magnetic power supply part; and P is a differential output.

Best Mode for Carrying Out the Invention

Embodiments of the present invention are described in detail below with referring to the accompanying drawings.

(First embodiment)

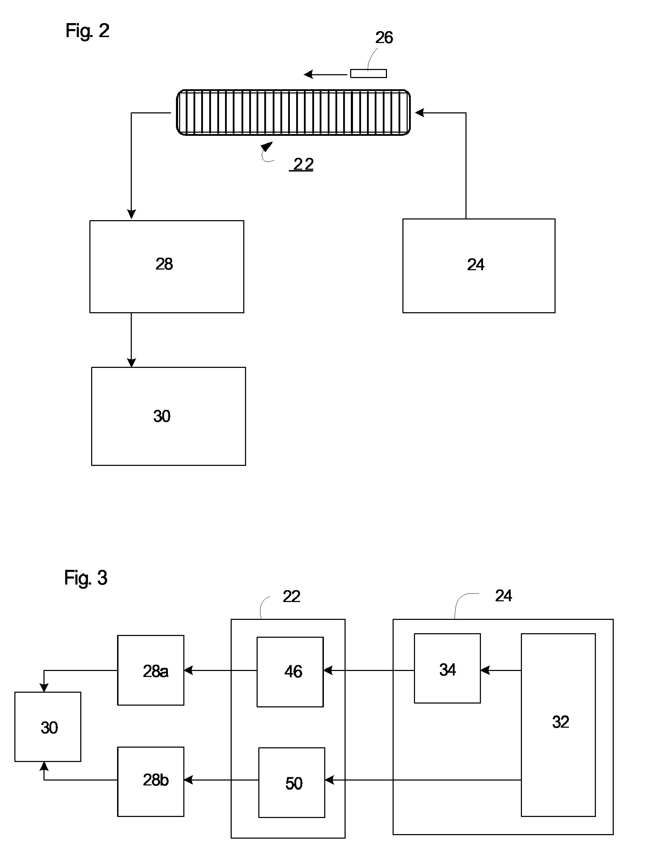

Fig. 2 is a conceptual view showing an example of a constitution of the decision machine of detection tag using magnetic field, of the present invention. In Fig. 2, 22 is a cross coil which has a characteristic structure of the present invention as described below.
To the cross coil 22 are supplied a plurality of AC powers of different phases from a magnetic power supply part 24. Owing to this supply of powers, an alternating magnetic field is formed along the surface of the cross coil 22. When a detection tag 26 is moved along the surface (the upper surface in Fig. 2) of the cross coil 22, the formed alternating magnetic field is distorted. This distorted alternating magnetic field is detected by the cross coil 22, and the detected signal is sent to a signal processor part 28 and subjected to predetermined signal processing. Then, the processed signal is sent to a decision part 30, where the deactivation or non-deactivation of the detection tag 26 is ascertained.

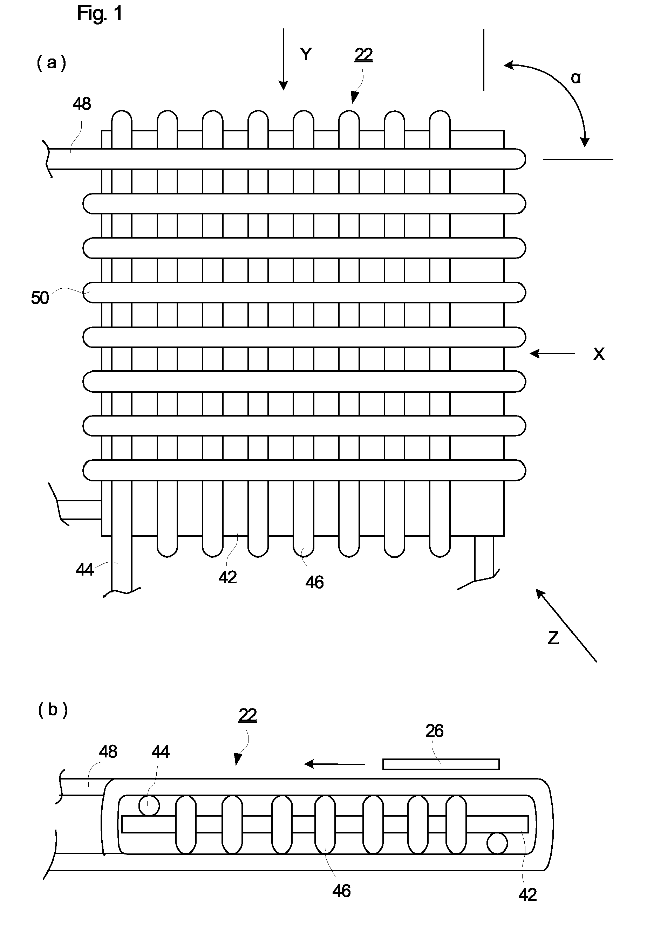

Fig. 1(a) is a plan view showing an example of cross coil used in the above decision machine of detection tag using magnetic field, and Fig. 1(b) is a side view thereof. In Fig. 1, 22 is a cross coil. 42 is a flat plate-shaped frame member and is formed in a rectangular shape (a square in Fig. 1) with an insulating sheet made of a resin, wood, glass, ceramic, ferrite or the like. A coated conductor 44 is wound round the frame member 42 along on of the opposing two sides, whereby a flat, first individual coil 46 is formed. Accordingly, the direction of the central axis of the first individual coil 46, i.e. the direction of the magnetic flux formed by the first individual coil 46 is the direction of an arrow X shown in Fig. 1(a).

A coated conductor 48 is wound on the outer surface of the first individual coil 46 along the opposing two sides of the frame member 42 which are different from the above-mentioned two opposing sides, whereby a flat, second individual coil 50 is formed. Accordingly, the direction of the central axis of the second individual coil 50, i.e. the direction of the magnetic flux formed by the second individual coil 50 is the direction of an arrow Y shown in Fig. 1(a). Thus, the first individual coil 46 and the second individual coil 50 have respective central axes on the same plane and the angle $\alpha$ formed by the two central axes is 90°.

As to the size of the cross coil 22, there is no particular restriction. The size may be such that, when the detection tag 26 is moved along the upper surface of the cross coil 22, the deactivation of the detection tag 26 can be ascertained magnetically. The movement distance of the detection tag 26, necessary for magnetic ascertainment of the deactivation of the detection tag 26 is preferred to be generally 30 mm or more and, from the standpoint of practical application, 30 to 100 mm.

Fig. 3 is a block diagram showing a circuit constitution of the above decision machine of detection tag using magnetic field. A magnetic power supply part 24 is constituted by an oscillator 32 and a phase modulator 34. The AC power generated by the oscillator 32 is divided into two portions. One AC power portion is sent to the phase modulator 34; its phase is changed by the phase modulator 34 by 90° as compared with that of other AC power portion; the resulting AC power is supplied to a first individual coil 46.

A second individual coil 50 is supplied the other AC power portion of the same phase generated by the oscillator 32. Therefore, the first individual coil 46 and the second individual coil 50 are supplied AC powers of different (by 90°) phases. As a result, the distribution of the magnetic field intensity above the cross coil 22 becomes highly uniform. Consequently, any non-deactivated detection tag 26 which enters above the upper surface of the cross coil 22, can be detected reliably irrespectively of the entering site of the detection tag 26.

The Alternating magnetic field above the cross coil 22, which has been distorted by entering of the detection tag 26, is detected by the first individual coil 46 and the second individual coil 50; the detected signals are sent to signal processor parts 28a and 28b, and are subjected to processings such as Fourier transform, filtration and the like; then, the deactivation or non-deactivation of the detection tag 26 is ascertained by a decision part 30.

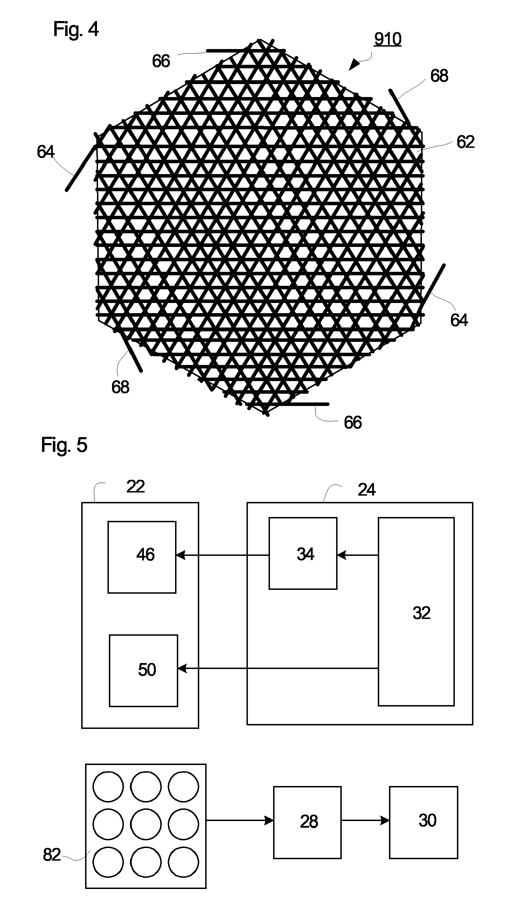

Fig. 4 is other an example of cross coil 910 used in the present invention. In this cross coil 910, three coated conductors 64, 66 and 68 are wound round a frame member 62 (which is a hexagonal flat sheet) so as to form three individual coils whose central axis directions differ by 60° between each two adjacent central axes. The three individual coils are supplied AC powers whose phases differ by 60° from one another. In a similar manner, a cross coil constituted by any number of individual coils can be formed using a frame member of desired polygon. The shape of the frame member is not restricted to a regular polygon and may also be any desired shape such as rectangle, rhombus, ellipse, circle and the like. The frame member is not restricted to a thin flat plate and may also be a relatively thick rectangular prism or a cube. For simplicity of production, there is preferred a cross coil obtained by forming two individual coils on a frame member of regular tetragon flat sheet. In this case, the angle formed by the central axes of the two individual coils is 90°.

When the number of individual coils is n, the angle $\alpha$ formed by each two adjacent central axes of the individual coils is most preferably:

$$\alpha = 180/n \quad \text{(degree)}$$

The angle $\alpha$ is not restricted to the above and may be:

$$\alpha = 180/n \pm 180/2n \quad \text{(degree)}$$

because this angle functions with no substantial problem.

The magnetic field intensity generated by the individual coils is preferably 120 A/m or more at the detection site of detection tag and 150 to 250 A/m from the standpoint of practical application.

(Second embodiment)

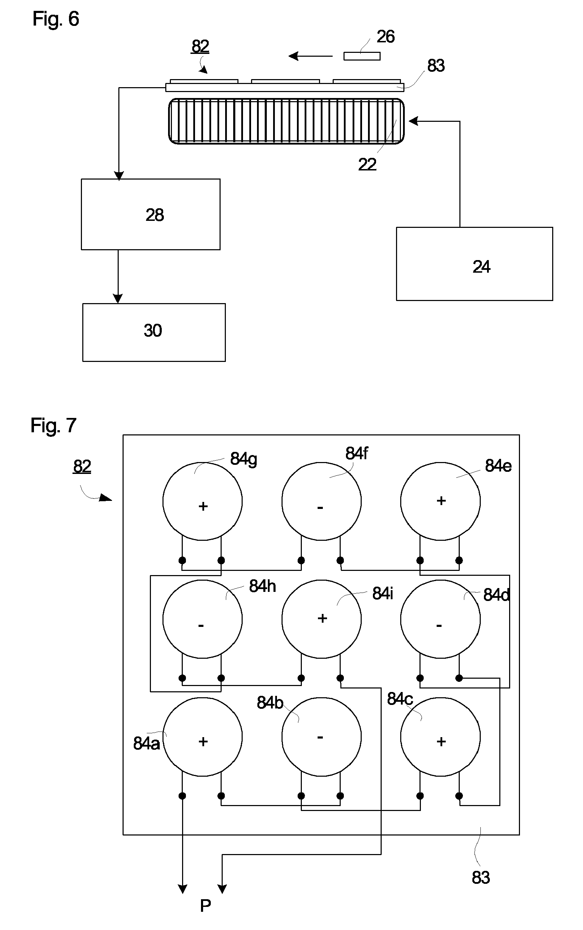

Fig. 6 shows other embodiment of the present invention. In the first embodiment, the same cross coil performs a function of magnetic field generation and a function of detection of the magnetic field.

In the second embodiment, a magnetic field is generated by a cross coil and the distortion of the magnetic field caused by a detection tag is detected by a detection coil which is different from the cross coil and provided separately.

In Fig. 6, a cross coil 22 is the same as described in the first embodiment. Above this cross coil 22 is fitted a detection coil 82 adjacently to the cross coil 22. Incidentally, 26 is a detection tag. In the following drawings, the same numerals are given to the same constitution for simplicity of description.

Fig. 5 is a block diagram showing the electronic circuit of the decision machine of detection tag using magnetic field (second embodiment) shown in Fig. 6.

In Fig. 5, AC powers of different (by 90°) phases are supplied from a magnetic power supply part 24 to the individual coils 46 and 50 of a cross coil 22, whereby is formed a magnetic field above the cross coil 22. When, in this state, a non-deactivated detection tag 26 enters above the cross coil 22, the magnetic field is distorted. The principle up to this point is the same as in the first embodiment.

This distortion of magnetic field is detected by a detection coil 82 provided above the cross coil 22; the detected signals are subjected to processings such as Fourier transform, filtration and the like at a signal processor part 28; then, the deactivation or non-deactivation of the detection tag 26 is ascertained at a decision part 30.

Fig. 7 is a view showing the constitution of a detection coil 82 which can be used in the second embodiment. This detection coil 82 is constituted by fitting a plurality (nine in Fig. 7) of small coils 84a to 84i to one side of a substrate 83 made of resin, wood, glass, ceramic, ferrite or the like. These small coils 84a to 84i are connected in series in such a way that the directions of the winding of each two adjacent small coils become opposite to each other. Therefore, the magnetic flux directions of each two adjacent small coils 84a to 84i become opposite to each other. The magnetic flux direction of each small coil is expressed by a signal + or -, shown in the center of the small coil 84a to 84i.

As described above, by arranging a plurality of small coils 84a to 84i, a large detection area is secured. Further, since the signals of distorted magnetic fields are taken as a differential output P of the individual small coils, external noises are cancelled, resulting in a higher detection accuracy.

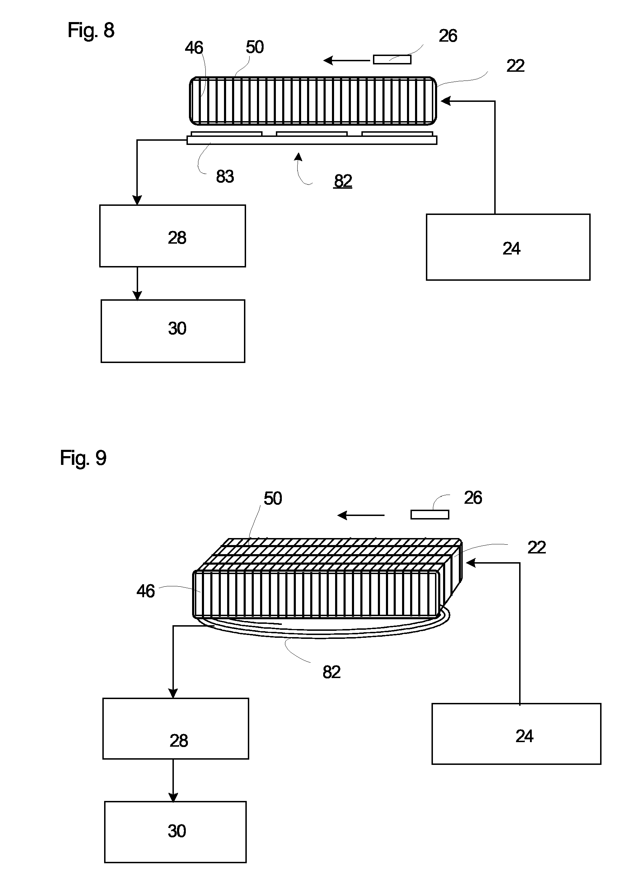

In the above description, the detection coil 82 was provided above the cross coil 22. However, the detection coil 82 may be provided below the cross coil 22, as shown in Fig. 8. Further, the number of small coils is not restricted and may be one.

Fig. 9 is a case of using, as a detection coil 82, one loop coil obtained by winding a conductor into a flat spiral shape. In this case, distorted signals are not taken out as a differential output; therefore, the accuracy of detection is a little low as compared with a case of taking out the distorted signals as a differential output.

Examples

There were produced decision machines of detection tag using magnetic field, described in the following Examples and Comparative Example, and they were examined for the decision ability of deactivation of detection tag.

There were used detection tags whose detection distance had been adjusted to 10 mm. The detection distance was measured using gates for prevention of shoplifting, EG-C45 (a product of LINTEC CORPORATION).

The above detection tag was moved parallel to the surface of detection coil at a speed of 0.5 m/sec and there was obtained decisions of the machine. From the result there was examined the detection accuracy of the decision machine of detection tag using magnetic field. The distance between the detection tag moved parallel to the surface of detection coil and that of detection coil was maintained at 15 mm.

Example 1

There was produced a decision machine of detection tag using magnetic field, having a constitution shown in Fig. 2. A first individual coil 46 was formed by winding an enamel-coated copper wire of 0.315 mm in diameter 255 times along the two opposing sides of a frame member of rectangular prism shape, made of flat wooden plate having a width of 120 mm, a depth of 120 mm and a height of 15 mm. Then, an enamel-coated copper wire of 0.315 mm in diameter was wound 255 times round the first individual coil 46 to form a second individual coil 50, in such a way that the central axes of the first individual coil 46 and the second individual coil 50 formed an angle of 90°. Thereby, a cross coil 22 was produced.

The first individual coil 46 and the second individual coil 50 were supplied alternate currents of 306 Hz and 1.2 A, which differed in phase by 90°.

The output signals from the two individual coils were subjected to Fourier transform at two signal processor parts 28a and 28b, as shown in Fig. 3. Of the frequency components obtained, harmonic components of 306 Hz (306 Hz x 2, 3, 4, ... ) were detected by a decision part 30. Based on the decision result, the deactivation or non-deactivation of detection tag was ascertained.

Example 2

There was produced a decision machine of detection tag using magnetic field, having a constitution shown in Fig. 6.

(Cross coil)

A first individual coil 46 was formed by winding an enamel-coated copper wire of 0.5 mm in diameter 200 times along the two opposing sides of a frame member of rectangular prism shape, made of flat wooden plate having a width of 120 mm, a depth of 120 mm and a height of 30 mm. Then, an enamel-coated copper wire of 0.5 mm in diameter was wound 200 times round the first individual coil 46 to form a second individual coil 50, in such a way that the central axes of the first individual coil 46 and the second individual coil 50 formed an angle of 90°. Thereby, a cross coil 22 was produced.

The first individual coil 46 and the second individual coil 50 were supplied alternate currents of 306 Hz and 1.2 A, which differed in phase by 90°.

(Detection coil)

An enamel-coated copper wire of 0.2 mm in diameter was wound 60 times clockwise in a circular ring shape of 20 mm in diameter, to form nine cylindrical coils each having a height of 2 mm. These nine coils were arranged on a cork plate-made substrate 83 in three lengthwise rows and three crosswise rows (each row contained three coils) so that the center-to-center distance between two adjacent coils was 30 mm and the central axis directions of all the coils became parallel to one another. Further, all the coils were connected in series so that the current directions of each two adjacent coils became opposite to each other.

The thus-produced detection coil 82 was provided in such a way that the lower side of each cylindrical coil was 10 mm apart from the upper surface of the cross coil 22, as shown in Fig. 6. In this case, the plane including the central axes of the individual coils 46 and 50 of the cross coil 22 and the substrate 83 having the detection coil 82 thereon are fitted parallel to each other.

In the detection coil 82, the current directions of each two adjacent coils are opposite to each other; therefore, the detection coil 82 is a kind of differential circuit. The total current (signal) of all the nine coils was sent to a signal processor part 28 and subjected to Fourier transform for conversion into frequency components. The frequency components obtained included, besides the frequency component 306 Hz of the supplied AC power, harmonic components which were 2, 3, 4, ⋯ times of 306 Hz. The presence of such harmonic components was examined by a decision part 30. Based on the result, the deactivation or non-deactivation of detection tag was ascertained. The result is shown in Table 1.

Comparative Example 1

As shown in Fig. 10, an enamel-coated copper wire of 0.28 mm in diameter was wound in a spiral shape 1,200 times to produce two circular planar coils 94a and 94b each of 120 mm in diameter. The two circular planar coils 94a and 94b were placed apart by 10 mm in a state that their central axes agreed with each other. Using the circular planar coils 94a and 94b, there was constituted a decision machine of detection tag using magnetic field.

In this decision machine of detection tag using magnetic field, alternate currents each of 306 Hz and 0.2 A, having the same phase were sent from a magnetic electric supply part 95 to the circular planar coils 94a and 94b, to generate an Alternating magnetic field. In this state, a detection tag 26 was allowed to enter the surface of the circular planar coil 94a horizontally with a distance of 15 mm kept between the detection tag and the surface of the circular planar coil 94a.

The differential output of the currents of the two circular planar coils 94a and 94b was taken out and the signal was subjected to Fourier transform at a signal processor part 28. The presence in the frequency components obtained, of harmonic components (306 Hz x 2, 3, 4, ⋯) besides the frequency component 306 Hz of the supplied alternate current was examined at a decision part 30. Based on the result, the deactivation or non-deactivation of detection tag was ascertained. The result is shown in Table 1.

Test results

A detection tag was allowed to enter the periphery or center of the upper side (detection surface) of a cross coil 22 or a circular planar coil, from the lengthwise direction (a direction parallel to the arrow Y of Fig. 1), the crosswise direction (a direction parallel to the arrow X of Fig. 1) or the oblique direction (a direction parallel to the arrow Z of Fig. 1). Thereby, the decision ability of the decision machine of detection tag using magnetic field was examined. The result is shown in Table 1.

Table 1

| Direction of tag entering | | Example 1 | Example 2 | Comparative Example |
|---|---|---|---|---|
| Crosswise direction (X) | Periphery | D | D | N |
| | Center | D | D | D |
| Lengthwise direction (Y) | Periphery | D | D | N |
| | Center | D | D | D |
| Oblique direction (Z) | Periphery | D | D | N |
| | Center | D | D | D |
| D: There was <u>d</u>etection of detection tag. | | | | |
| N: There was <u>n</u>o detection of detection tag. | | | | |

**Claims**

1. A decision machine of detection tag using magnetic field, comprising:

   a cross coil constituted by a plurality of individual coils which have been wound round a frame member so as to form a predetermined differential angle between the central axes of the individual coils,
   a magnetic power supply part comprising an oscillator for generating an AC power and a phase modulator for differing each other the phase of AC power generated by the oscillator, by a predetermined differential angle, to supply powers of different phases to the individual coils,
   a signal processor part connected to the plurality of individual coils, and
   a decision part for deciding the output signal sent from the signal processor part.

2. The decision machine of detection tag using magnetic field, comprising:

   a cross coil constituted by a plurality of individual coils which have been wound round a frame member so as to form a predetermined differential angle between the central axes of the individual coils,
   a magnetic power supply part comprising an oscillator for generating an AC power and a phase modulator for differing each other the phase of AC power generated by the oscillator, by a predetermined differential angle, to supply powers of different phases to the individual coils,
   at least one detection coil provided parallel to a plane including the central axes of the individual coils,
   a signal processor part connected to the at least one detection coil, for processing the output signal of the detection coil, and
   a decision part for deciding the output signal sent from the signal processor part.

3. The decision machine of detection tag using magnetic field according to Claim 2, wherein a plurality of detection coils are connected in series so that the magnetic flux directions of each adjacent detection coils become opposite to each other.

4. The decision machine of detection tag using magnetic field according to any of Claims 1 to 3, wherein the cross coil is provided so that the magnetic flux directions of two adjacent individual coils differ by 90° and wherein the phases of the AC powers supplied to the individual coils are allowed to differ by 90°.

## Fig. 1

( a )

( b )

Fig. 2

Fig. 3

Fig. 4

Fig. 5

Fig. 6

82

26

83

22

28

24

30

Fig. 7

82

84g 84f 84e

+ - +

84h 84i 84d

- + -

84a 84b 84c

+ - +

83

P

Fig. 8

Fig. 9

Fig. 10

26

94

94
b

95

28

30

Fig. 11

152

150

| | | |
| N | N | N |
| S | S | S |
| N | N | N |

156

154

Fig. 12

167

163

165

162

160

169

168

Fig. 13

Fig. 14

**European Patent Office**

**EUROPEAN SEARCH REPORT**

Application Number

EP 06 10 0934

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 99/39313 A (SENSORMATIC ELECTRONICS CORPORATION) 5 August 1999 (1999-08-05) | 1,4 | INV. G01V15/00 |
| Y | * page 9, lines 24-33; figures 6,9-11 *<br>* page 10, line 7 - line 18 *<br>* page 12, line 33 - page 13, line 6 *<br>* page 13, line 36 - page 14, line 32 *<br>* page 16, line 13 - line 25 *<br>* page 18, line 9 - line 16 * | 2,3 | G08B13/24 |
| X | US 6 111 507 A (ALICOT ET AL) 29 August 2000 (2000-08-29) | 1,4 | |
| Y | * column 4, line 25 - line 40; figures 2,3,9a *<br>* column 11, line 3 - line 23 * | 2,3 | |
| Y | US 6 181 249 B1 (MAITIN STEVEN R ET AL) 30 January 2001 (2001-01-30) * column 5, line 12 - line 42 * | 2,3 | |
| P,X | GB 2 415 865 A (REDCLIFFE LIMITED) 4 January 2006 (2006-01-04) * abstract * | 1-4 | TECHNICAL FIELDS SEARCHED (IPC) |
| A | US 5 905 435 A (COPELAND ET AL) 18 May 1999 (1999-05-18) * figures 1,2 * | 1-4 | G08B G01V |

The present search report has been drawn up for all claims

| Place of search | Date of completion of the search | Examiner |
|---|---|---|
| Munich | 13 April 2006 | Thomas, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 06 10 0934

This annex lists the patent family members relating to the patent documents cited in the above-mentioned European search report.
The members are as contained in the European Patent Office EDP file on
The European Patent Office is in no way liable for these particulars which are merely given for the purpose of information.

13-04-2006

| Patent document cited in search report | | Publication date | Patent family member(s) | | Publication date |
|---|---|---|---|---|---|
| WO 9939313 | A | 05-08-1999 | AU | 754327 B2 | 14-11-2002 |
| | | | AU | 1941799 A | 16-08-1999 |
| | | | BR | 9814917 A | 23-10-2001 |
| | | | CA | 2318086 A1 | 05-08-1999 |
| | | | CN | 1129878 C | 03-12-2003 |
| | | | EP | 1064631 A1 | 03-01-2001 |
| | | | JP | 2002502079 T | 22-01-2002 |
| | | | ZA | 9900045 A | 27-06-2000 |
| US 6111507 | A | 29-08-2000 | NONE | | |
| US 6181249 | B1 | 30-01-2001 | AU | 747399 B2 | 16-05-2002 |
| | | | AU | 2602900 A | 24-07-2000 |
| | | | CA | 2358167 A1 | 13-07-2000 |
| | | | EP | 1147501 A1 | 24-10-2001 |
| | | | WO | 0041150 A1 | 13-07-2000 |
| GB 2415865 | A | 04-01-2006 | NONE | | |
| US 5905435 | A | 18-05-1999 | AU | 734864 B2 | 21-06-2001 |
| | | | AU | 6322198 A | 18-09-1998 |
| | | | BR | 9807841 A | 12-09-2000 |
| | | | CA | 2280843 A1 | 03-09-1998 |
| | | | DE | 69829950 D1 | 02-06-2005 |
| | | | DE | 69829950 T2 | 29-09-2005 |
| | | | EP | 0962002 A1 | 08-12-1999 |
| | | | HK | 1025830 A1 | 13-01-2006 |
| | | | JP | 2002511163 T | 09-04-2002 |
| | | | WO | 9838610 A1 | 03-09-1998 |

EPO FORM P0459

For more details about this annex : see Official Journal of the European Patent Office, No. 12/82